# EUROPÄISCHE PATENTSCHRIFT

(11) **EP 4 565 804 B1**
(45) Veröffentlichungstag und Bekanntmachung des Hinweises auf die Patenterteilung: **06.05.2026**
(21) Anmeldenummer: 23738476.3
(22) Anmeldetag: 03.07.2023
(51) Int. Cl.: F16H 57/04

(54) **ANTRIEBSANORDNUNG UND FAHRZEUG MIT EINER SOLCHEN ANTRIEBSANORDNUNG**
DRIVE ASSEMBLY AND VEHICLE HAVING A DRIVE ASSEMBLY OF THIS TYPE
ENSEMBLE D'ENTRAÎNEMENT ET VÉHICULE MUNI D'UN TEL ENSEMBLE D'ENTRAÎNEMENT

(30) Priorität: 04.08.2022 DE 102022208109
(43) Veröffentlichungstag der Anmeldung: 11.06.2025
(73) Patentinhaber: Robert Bosch GmbH, 70442 Stuttgart (DE)
(72) Erfinder: SCHLITTENBAUER, Tobias, 71732 Tamm (DE)
(86) Internationale Anmeldenummer: PCT/EP2023/068186
(87) Internationale Veröffentlichungsnummer: WO 2024/028009

(56) Entgegenhaltungen:
- EP-A1- 3 578 856
- DE-A1- 102018 219 140
- DE-A1- 102019 132 590
- GB-A- 2 407 361

## Beschreibung

### Stand der Technik

Bei Antriebsanordnungen mit einer Rotorwelle und einer Getriebewelle, die mittels einer Steckverzahnung miteinander drehfest gekoppelt sind, entsteht an der Steckverzahnung (bzw. Passverzahnung) mit der Zeit Verschleiß und Passungsrost. Um dies möglichst zu verhindern, wird die Steckverzahnung geschmiert. Dies kann mittels einer Fettschmierung, die bspw. mittels O-Ringen abgedichtet ist, oder mittels eines an die Steckverzahnung zugeführten Schmiermittelflusses geschehen.

DE 10 2019 219 218 A1 offenbart eine derartige Antriebsanordnung, wobei die Schmierung der Steckverzahnung mittels eines gezielten Schmiermittelflusses erfolgen kann.

Aus der EP 3 578 856 A1 ist eine gattungsbildende Antriebsanordnung bekannt.

Nachteilig dabei ist, dass für einen gezielten Schmiermittelfluss oftmals eine Schmiermittelpumpe, mit der das Schmiermittel gefördert wird, eingesetzt werden muss. Ein gezielter Schmiermittelfluss ohne eine Schmiermittelpumpe ist oftmals nicht möglich.

### Offenbarung der Erfindung

Erfindungsgemäß wird eine Antriebsanordnung, insbesondere für ein Fahrzeug, vorgeschlagen, umfassend eine erste Welle mit einer ersten Verzahnung. Die erste Welle kann als Rotorwelle einer elektrischen Maschine ausgebildet sein.

Die Antriebsanordnung umfasst zudem eine zweite Welle mit einer zweiten Verzahnung. Die zweite Welle kann als Getriebeeingangswelle ausgebildet sein. Die zweite Welle kann Teil eines Getriebes sein, das in einem Getriebeinnenraum angeordnet ist.

Die erste Welle und die zweite Welle sind um eine Rotationsachse rotierbar. Die zweite Welle ist als Hohlwelle ausgebildet. Die erste Verzahnung der ersten Welle und die zweite Verzahnung der zweiten Welle bilden eine Steckverzahnung (bzw. eine Passverzahnung) zur Übertragung eines Drehmoments. Mit anderen Worten, die erste Welle und die zweite Welle sind insbesondere mittels der Steckverzahnung drehfest miteinander gekoppelt. Die erste Welle und zweite Welle können einander axial im Bereich der Steckverzahnung überlappen.

Die Antriebsanordnung umfasst mindestens einen Schmiermittelkanal zum Leiten von Schmiermittel in die zweite Welle. Der Schmiermittelkanal kann als Schmiermittelrippe und/oder als Schmiermittelreservoir ausgebildet sein. Bei dem Schmiermittel kann es sich um Öl handeln.

Das Schmiermittel kann so mittels einer Planschschmierung über den Schmiermittelkanal in die zweite Welle (Hohlwelle) geleitet und durch die zweite Welle zur Steckverzahnung transportiert werden. Damit kann eine passive Zwangsschmierung der Steckverzahnung ohne den Einsatz einer Schmiermittelpumpe bzw. Ölpumpe umgesetzt werden. Bei der Antriebsanordnung handelt es sich also insbesondere um eine ölpumpenfreie Ausgestaltung.

Erfindungsgemäß sind die erste Welle und die zweite Welle im Bereich der Steckverzahnung mittels des (gemeinsamen) Lagers gelagert. Das (gemeinsame) Lager umfasst einen Lagerinnenring. Der Lagerinnenring kontaktiert die erste Welle und die zweite Welle. Hierzu kann der Lagerinnenring optional eine größere axiale Länge als ein Lageraußenring aufweisen. Der Lagerinnenring weist mindestens eine Schmiermittelöffnung zum gezielten Leiten von Schmiermittel, insbesondere Öl, durch den Lagerinnenring auf. Die Schmiermittelöffnung kann als eine Durchgangsöffnung (bzw. Ölbohrung) ausgebildet sein. Die Schmiermittelöffnung kann radial orientiert sein. Es können mehrere Schmiermittelöffnungen am Lagerinnenring vorgesehen sein, die in gleichen Winkeln (äquidistant) über den Umfang des Lagerinnenrings verteilt sind. Damit kann das Schmiermittel gezielt durch den Lagerinnenring geleitet werden.

Somit kann mittels einer Planschschmierung die Steckverzahnung gezielt mit Schmiermittel versorgt und auf diese Weise geschmiert werden. Die durch Verschleiß (bzw. Abrieb) möglicherweise entstehenden Partikel innerhalb der Steckverzahnung können so mit dem Schmiermittel gezielt abtransportiert werden. Damit kann eine kostengünstige, robuste und mechanisch einfache Lösung zur Schmierung der Steckverzahnung bereitgestellt werden. Es sind insbesondere keine Dichtungen oder andere verschleißanfälligen Elemente zur Schmierung der Steckverzahnung benötigt.

Vorliegend ist mit "axial" bzw. "axialer Richtung" eine entlang der Rotationsachse bzw. parallel zur Rotationsachse ausgerichtete Richtung gemeint. Mit anderen Worten, die Rotationsachse ist in axialer Richtung orientiert. Entsprechend ist mit "radial" bzw. "radialer Richtung" eine senkrecht zur Rotationsachse ausgerichtete und von der Rotationsachse ausgehende Richtung gemeint.

Gemäß einer Weiterbildung kann der Schmiermittelkanal im Bereich eines von der ersten Welle abgewandten Endes der zweiten Welle angeordnet sein. Der Schmiermittelkanal kann in das von der ersten Welle abgewandte Ende münden oder hineinragen. Mittels des Schmiermittelkanals kann das Schmiermittel auf einfache Art und Weise in die zweite Welle geleitet werden.

Gemäß einer Weiterbildung kann die zweite Welle ein Stopfenelement aufweisen, um ein Austreten von Schmiermittel zu verhindern. Das Stopfenelement kann konisch geformt sein. Das Stopfenelement kann an dem von der ersten Welle abgewandten Ende der zweiten Welle angeordnet sein. Das Stopfenelement kann das Austreten von Schmiermittel aus dem von der ersten Welle abgewandten Ende der zweiten Welle verhindern. Mit dem Stopfenelement kann ein ungewollter Rückfluss des Schmiermittels aus der zweiten Welle bspw. zurück in den Getriebeinnenraum verhindert werden. Somit steht das gesamte in die zweite Welle eingeleitete Schmiermittel zur Schmierung der Steckverzahnung zur Verfügung.

Gemäß einer Weiterbildung kann die erste Welle an ihrer Außenseite mindestens eine Schmiermittelnut zum gezielten Leiten von Schmiermittel, insbesondere Öl, an der Außenseite der ersten Welle aufweisen. Die Schmiermittelnut kann einen axialen (axial ausgerichteten) Abschnitt und einen radialen (radial ausgerichteten) Abschnitt aufweisen. Die Form der Schmiermittelnut kann abhängig von der Kontur der Außenseite der ersten Welle sein. Es können mehrere Schmiermittelnuten an der Außenseite der ersten Welle vorgesehen sein, die in gleichen Winkeln (äquidistant) über den Umfang der ersten Welle verteilt sind. Damit kann das Schmiermittel gezielt über die Außenseite der ersten Welle geleitet werden.

Gemäß einer Weiterbildung kann an der ersten Welle ein Radialwellendichtring angeordnet sein. Der Radialwellendichtring kann axial beabstandet von dem (gemeinsamen) Lager angeordnet sein. Mittels des Radialwellendichtrings kann bspw. die elektrische Maschine (die insbesondere die erste Welle bzw. Rotorwelle antreiben kann) von dem Getriebeinnenraum (bzw. von dem darin angeordneten Schmiermittel) abgedichtet werden.

Gemäß einer Weiterbildung kann die Antriebsanordnung einen Schmiermittelleitring zum gezielten Leiten von Schmiermittel, insbesondere Öl, zum (gemeinsamen) Lager und/oder zum Radialwellendichtring aufweisen. Der Schmiermittelleitring kann zwischen dem (gemeinsamen) Lager und dem Radialwellendichtring angeordnet sein. Der Schmiermittelleitring umgibt die erste Welle insbesondere nach radial außen. Der Schmiermittelleitring ist vorzugsweise relativ zur ersten Welle feststehend (Schmiermittelleitring dreht sich bei rotierender Welle nicht mit dieser mit). Der Schmiermittelleitring kann hierzu drehfest ins Gehäuse der Antriebsanordnung eingebracht sein.

Der Schmiermittelring kann einen radial zur ersten Welle (bzw. zur Rotationsachse) ausgerichteten, insbesondere an die erste Welle angrenzenden, ersten Abschnitt aufweisen Der Schmiermittelring kann einen axial zur ersten Welle (bzw. zur Rotationsachse) ausgerichteten, insbesondere von der ersten Welle beabstandete, zweiten Abschnitt aufweisen. Der erste Abschnitt kann zwischen dem zweiten Abschnitt und der ersten Welle angeordnet sein. Der erste Abschnitt kann an den zweiten Abschnitt angrenzen. Mittels des Schmiermittelleitrings (bspw. durch die Wahl der Form und/oder Maße des Schmiermittelleitrings) kann die Menge des Schmiermittels, die an das (gemeinsame) Lager und/oder den Radialwellendichtring geleitet wird, wunschgemäß eingestellt werden.

Gemäß einer Weiterbildung können die erste Verzahnung der ersten Welle als Außenverzahnung und die zweite Verzahnung der zweiten Welle als Innenverzahnung ausgebildet sein. Damit ragt die erste Welle insbesondere mit ihrer ersten Verzahnung in die zweite Welle (Hohlwelle) hinein. Mit anderen Worten, die zweite Verzahnung der zweiten Welle kann auf die erste Verzahnung der ersten Welle aufgesteckt werden.

Gemäß einer Weiterbildung können die erste Welle als Hohlwelle, die erste Verzahnung der ersten Welle als Innenverzahnung und die zweite Verzahnung der zweiten Welle als Außenverzahnung ausgebildet sein. Damit ragt die zweite Welle insbesondere mit ihrer zweiten Verzahnung in die erste Welle (Hohlwelle) hinein. Mit anderen Worten, die erste Verzahnung der ersten Welle kann auf die zweite Verzahnung der zweiten Welle aufgesteckt werden.

Die Antriebsanordnung kann bspw. als E-Achse ausgebildet sein oder Bestandteil einer E-Achse bilden.

Erfindungsgemäß wird ein Fahrzeug, insbesondere ein Kraftfahrzeug, mit mindestens einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen und/oder die nachfolgend noch erläuterten Maßnahmen dienen.

Nachfolgend werden Ausführungsformen der Erfindung unter Bezugnahme auf die beiliegenden Zeichnungen erläutert. Es zeigen:
- Figur 1: einen Ausschnitt einer Schnittansicht auf eine Antriebsanordnung gemäß einem ersten Ausführungsbeispiel;
- Figur 2: einen Ausschnitt einer perspektivischen Ansicht auf eine erste Welle der Antriebsanordnung gemäß Figur 1; und
- Figur 3: einen Ausschnitt einer Schnittansicht auf die Antriebsanordnung gemäß einem zweiten Ausführungsbeispiel.

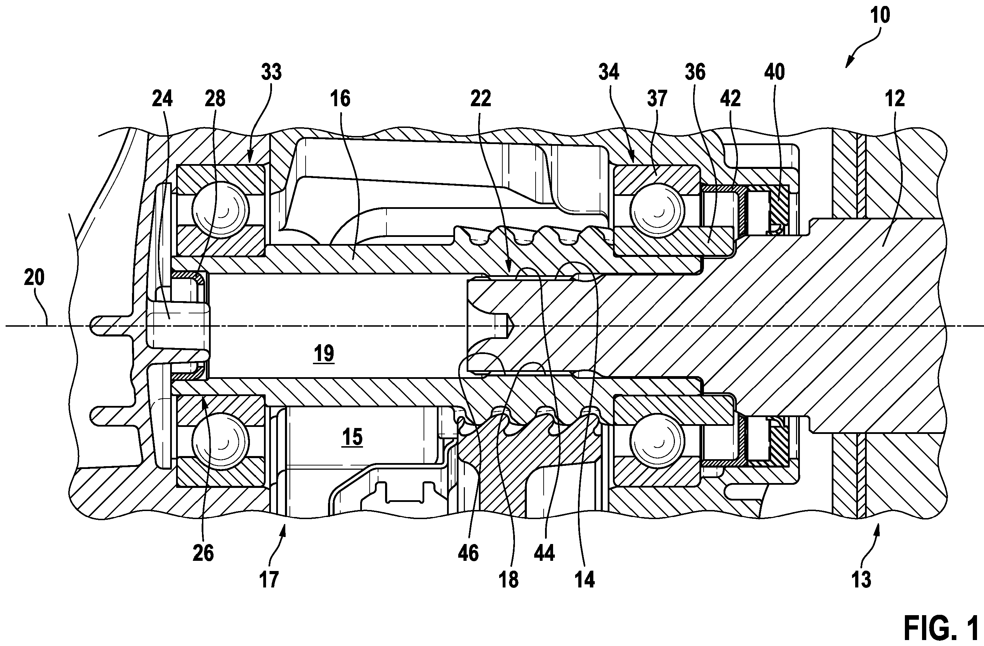

Die Antriebsanordnung trägt in Figur 1 insgesamt das Bezugszeichen 10. Die Antriebsanordnung 10 umfasst eine erste Welle 12 mit einer ersten Verzahnung 14. Die erste Verzahnung 14 ist vorliegend als Außenverzahnung 44 ausgebildet. Die erste Welle 12 ist vorliegend als Rotorwelle einer elektrischen Maschine 13 ausgebildet.

Die Antriebsanordnung 10 weist eine zweite Welle 16 mit einer zweiten Verzahnung 18 auf. Die zweite Verzahnung 18 ist vorliegend als Innenverzahnung 46 ausgebildet. Die zweite Welle 16 ist vorliegend als Getriebeeingangswelle eines in einem Getriebeinnenraum 15 angeordneten Getriebes 17 ausgebildet.

Die erste Welle 12 und die zweite Welle 16 sind um eine Rotationsachse 20 rotierbar ausgebildet. Die erste Welle 12 ragt in die zweite Welle 16, die als Hohlwelle ausgebildet ist, hinein. Die Verzahnungen 14, 18 der beiden Wellen 12, 16 bilden eine Steckverzahnung 22. Die erste Welle 12 und die zweite Welle 16 sind über die Steckverzahnung 22, die durch die erste Verzahnung 14 und die zweite Verzahnung 18 gebildet wird, drehfest miteinander gekoppelt bzw. verbunden.

Die Antriebsanordnung 10 umfasst ein Schmiermittelkanal 24. Der Schmiermittelkanal 24 ist im Bereich eines von der ersten Welle 12 abgewandten Endes 26 der zweiten Welle 16 angeordnet und ragt teilweise in die zweite Welle 16 hinein. Das Schmiermittel kann so aus einem Schmiermittelsumpf (Planschschmierung) in dem Getriebeinnenraum 15 aufgrund der Rotation der einzelnen Elemente des Getriebes 17 in Figur 1 nach oben gefördert bzw. geschleudert werden. Das Schmiermittel gelangt so in den Schmiermittelkanal 24 und wird von dort in die zweite Welle 16 geleitet.

Die Antriebsanordnung umfasst ein Stopfenelement 28. Das Stopfenelement 28 ist an dem von der ersten Welle 12 abgewandten Ende 26 der zweiten Welle 16 angeordnet. Das Stopfenelement 28 ist konisch ausgebildet und verhindert ein Auslaufen von Schmiermittel aus der zweiten Welle 16.

Die zweite Welle 16 wird an dem von der ersten Welle 12 abgewandtem Ende 26 mittels eines (weiteren) Lagers 33 gelagert.

Die erste Welle 12 und die zweite Welle 16 sind im Bereich der Steckverzahnung 22 mittels eines (gemeinsamen) Lagers 34 gelagert. Das (gemeinsame) Lager 34 weist einen Lagerinnenring 36 und einen Lageraußenring 37 auf. Dabei kontaktiert der Lagerinnenring 36 die erste Welle 12 und die zweite Welle 16. Im Beispiel weist der Lagerinnenring 36 eine größere axiale Länge als der Lageraußenring 37 auf.

An der ersten Welle 12 ist ein Radialwellendichtring 40 angeordnet. Der Radialwellendichtring 40 dichtet die elektrische Maschine 13 vom Getriebe 17 bzw. vom Getriebeinnenraum 15 ab. Zwischen dem Radialwellendichtring 40 und dem (gemeinsamen) Lager 34 ist ein Schmiermittelleitring 42 angeordnet. Mittels des Schmiermittelleitrings 42 kann die Menge an Schmiermittel, die zum (gemeinsamen) Lager 34 und/oder zum Radialwellendichtring 40 geleitet wird, wunschgemäß eingestellt werden.

Das Schmiermittel wird mittels des Schmiermittelkanals 24 in die zweite Welle 16 geleitet. Aufgrund der Rotation der ersten Welle 12 und ständigem Einleiten (Nachfließen) von Schmiermittel mittels des Schmiermittelkanals 24 wird das Schmiermittel insbesondere an der Innenwandung 19 der zweiten Welle 16 in Figur 1 nach rechts, in Richtung der Steckverzahnung 22, geleitet. Das Schmiermittel fließt durch die Steckverzahnung 22, womit diese geschmiert wird.

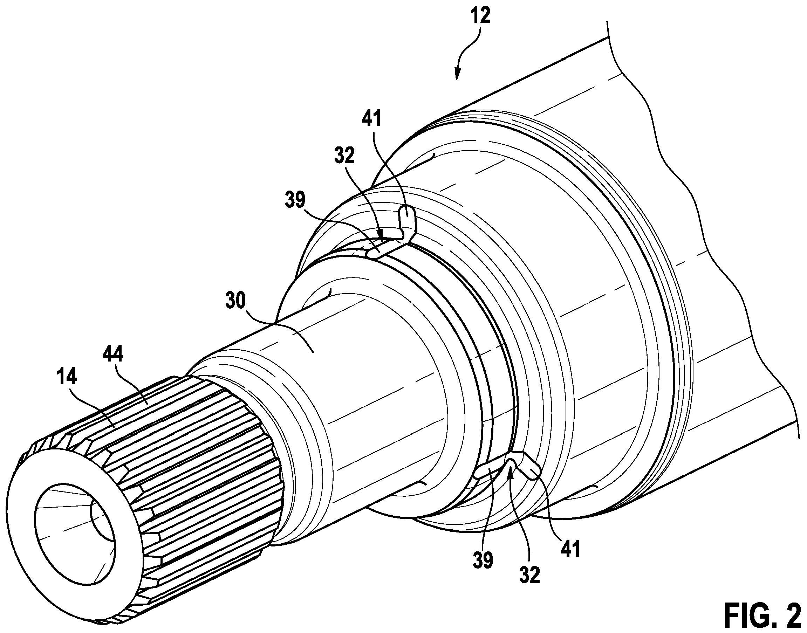

Das Schmiermittel fließt weiter an der Außenseite 30 (vgl. Fig. 2) der ersten Welle 12 entlang, bis es zwischen dem Lagerinnenring 36 und dem Schmiermittelleitring 42 austritt. Hier wird das Schmiermittel zum (gemeinsamen) Lager 34 und/oder zum Radialwellendichtring 40 mittels des Schmiermittelleitrings 42 verteilt. Das Schmiermittel tritt anschließend durch das (gemeinsame) Lager 34 in den Getriebeinnenraum 15 und fließt insbesondere aufgrund der Schwerkraft zurück in den Schmiermittelsumpf (nicht dargestellt). Von dort kann es wieder in dem Getriebeinnenraum 15 verteilt werden und gelangt in den Schmiermittelkanal 28. Der Schmiermittelkreislauf schließt sich somit.

Figur 2 zeigt einen Ausschnitt einer perspektivischen Ansicht auf die erste Welle 12 der Antriebsanordnung 10 gemäß Figur 1. Die erste Welle 12 weist an deren Außenseite 30 vorliegend drei Schmiermittelnuten 32 auf (nur zwei der drei Schmiermittelnuten 32 sind abgebildet). Diese sind äquidistant entlang des Umfangs der ersten Welle 12 angeordnet. Mit anderen Worten, die Schmiermittelnuten 32 sind entlang des Umfangs der ersten Welle 12 gleich weit von einander entfernt.

Die Schmiermittelnuten 32 weisen jeweils einen axialen Abschnitt 39 und einen radialen Abschnitt 41 auf. Der Verlauf der Schmiermittelnuten 32 entspricht der jeweiligen Kontur der Außenseite 30 der ersten Welle 12. Mittels der Schmiermittelnuten 32 kann das Schmiermittel gezielt entlang der Außenseite 30 der ersten Welle 12 geleitet werden. Die Schmiermittelnuten 32 sind in Figur 1 nicht zu sehen, da der in Figur 1 dargestellte Schnitt nicht durch die Schmiermittelnuten 32 verläuft.

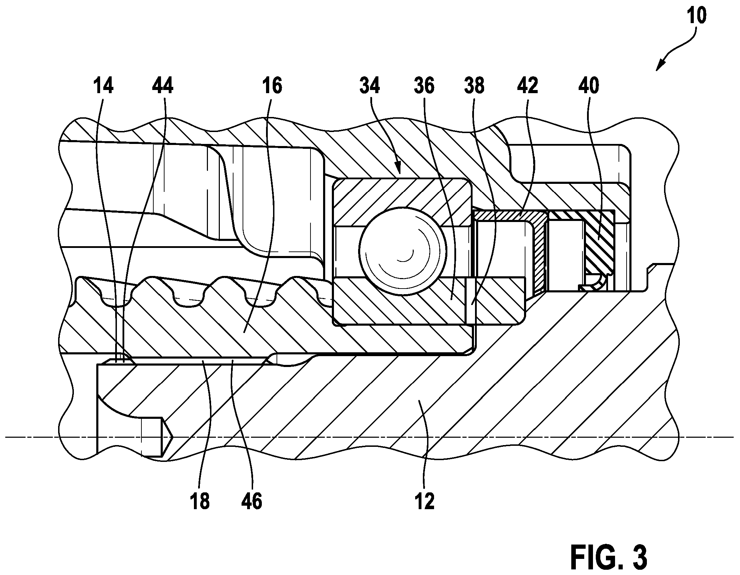

Figur 3 zeigt einen Ausschnitt einer Schnittansicht auf die Antriebsanordnung 10 gemäß einem zweiten Ausführungsbeispiel. Das zweite Ausführungsbeispiel unterscheidet sich von dem ersten, in den Figuren 1 und 2 gezeigten, Ausführungsbeispiel dadurch, dass die erste Welle 12 keine Schmiermittelnuten 32 aufweist (schmiermittelnutfreie Ausgestaltung).

Stattdessen weist der Lagerinnenring 36 mehrere Schmiermittelöffnungen 38 auf. Diese sind vorliegend als radial erstreckte Bohrungen im Lagerinnenring 36 ausgebildet. Die Schmiermittelöffnungen münden an der radialen Innenseite des Lagerinnenrings 36 zwischen der ersten Welle 12 und der zweiten Welle 16. Damit kann das zwischen der ersten Welle 12 und der zweiten Welle 16 austretende Schmiermittel direkt mittels der Schmiermittelöffnungen nach radial außen abgeleitet werden. Das Schmiermittel gelangt so an das (gemeinsame) Lager 34 und den Schmiermittelleitring 42. Der Schmiermittelleitring 42 verteilt das Schmiermittel zwischen dem (gemeinsamen) Lager 34 und dem Radialwellendichtring 40. Anschließend gelangt das Schmiermittel durch das (gemeinsame) Lager 34 in den Getriebeinnenraum 15 (vgl. Fig. 1) und fließt insbesondere aufgrund der Schwerkraft in den Schmiermittelsumpf zurück. Damit ist der Schmiermittelkreislauf geschlossen.

Es ist ebenso denkbar, dass das erste Ausführungsbeispiel und das zweite Ausführungsbeispiel der Antriebsanordnung 10 miteinander kombiniert werden können, die Antriebsanordnung 10 also die Schmiermittelnuten 32 und die Schmiermittelöffnungen 38 aufweist.

## Patentansprüche

1. Antriebsanordnung (10), insbesondere für ein Fahrzeug, umfassend:
- eine erste Welle (12) mit einer ersten Verzahnung (14),
- eine zweite Welle (16) mit einer zweiten Verzahnung (18), wobei die erste Welle (12) und die zweite Welle (16) um eine Rotationsachse (20) rotierbar sind, wobei die zweite Welle (16) als Hohlwelle ausgebildet ist,
wobei die erste Verzahnung (14) der ersten Welle (12) und die zweite Verzahnung (18) der zweiten Welle (16) eine Steckverzahnung (22) zur Übertragung eines Drehmoments bilden, und
- mindestens einen Schmiermittelkanal (24) zum Leiten von Schmiermittel in die zweite Welle (16), **dadurch gekennzeichnet, dass** die erste Welle (12) und die zweite Welle (16) im Bereich der Steckverzahnung (22), mittels eines Lagers (34) gelagert sind, wobei das Lager (34) einen Lagerinnenring (36) umfasst, wobei der Lagerinnenring (36) die erste Welle (12) und die zweite Welle (16) kontaktiert, wobei der Lagerinnenring (36) mindestens eine Schmiermittelöffnung (38) zum gezielten Leiten von Schmiermittel durch den Lagerinnenring (36) aufweist.

2. Antriebsanordnung (10) nach Anspruch 1, **dadurch gekennzeichnet, dass** der Schmiermittelkanal (24) im Bereich eines von der ersten Welle (12) abgewandten Endes (26) der zweiten Welle (16) angeordnet ist und in das von der ersten Welle (12) abgewandte Ende (26) mündet oder hineinragt.

3. Antriebsanordnung (10) nach Anspruch 1 oder 2, **dadurch gekennzeichnet, dass** die zweite Welle (16) an ihrem von der ersten Welle (12) abgewandten Ende (26), einStopfenelement (28) aufweist, um ein Austreten von Schmiermittel, insbesondere aus dem von der ersten Welle (12) abgewandten Ende (26) der zweiten Welle (16), zu verhindern.

4. Antriebsanordnung (10) nach einem der voranstehenden Ansprüche, **dadurch gekennzeichnet, dass** die erste Welle (12) an ihrer Außenseite (30) mindestens eine Schmiermittelnut (32) zum gezielten Leiten von Schmiermittel an der Außenseite (30) der ersten Welle (12) aufweist.

5. Antriebsanordnung (10) nach einem der voranstehenden Ansprüche, **dadurch gekennzeichnet, dass** das Schmiermittel, Öl ist.

6. Antriebsanordnung (10) nach einem der voranstehenden Ansprüche, **dadurch gekennzeichnet, dass** an der ersten Welle (12) ein Radialwellendichtring (40) angeordnet ist.

7. Antriebsanordnung (10) nach einem der zwei voranstehenden Ansprüche, **dadurch gekennzeichnet, dass** die Antriebsanordnung (10) einen Schmiermittelleitring (42) zum gezielten Leiten von Schmiermittel, zum Lager (34) und/oder zum Radialwellendichtring (40) aufweist.

8. Antriebsanordnung (10) nach einem der voranstehenden Ansprüche, **dadurch gekennzeichnet, dass** die erste Verzahnung (14) der ersten Welle (12) als Außenverzahnung (44) und die zweite Verzahnung (18) der zweiten Welle (16) als Innenverzahnung (46) ausgebildet sind.

9. Antriebsanordnung (10) nach einem der Ansprüche 1 bis 7, **dadurch gekennzeichnet, dass** die erste Welle (12) als Hohlwelle, die erste Verzahnung (14) der ersten Welle (12) als Innenverzahnung und die zweite Verzahnung (18) der zweiten Welle (16) als Außenverzahnung ausgebildet sind.

10. Fahrzeug, insbesondere Kraftfahrzeug, mit mindestens einer Antriebsanordnung (10) nach einem der voranstehenden Ansprüche.

## Claims

1. Drive assembly (10), in particular for a vehicle, comprising:
- a first shaft (12) having a first toothing (14),
- a second shaft (16) having a second toothing (18), wherein the first shaft (12) and the second shaft (16) are rotatable about an axis of rotation (20), wherein the second shaft (16) is in the form of a hollow shaft,
wherein the first toothing (14) of the first shaft (12) and the second toothing (18) of the second shaft (16) form a spline toothing (22) for transmitting a torque, and
- at least one lubricant channel (24) for conducting lubricant into the second shaft (16), **characterized in that** the first shaft (12) and the second shaft (16) are mounted in the region of the spline toothing (22) by means of a bearing (34), wherein the bearing (34) comprises a bearing inner ring (36), wherein the bearing inner ring (36) contacts the first shaft (12) and the second shaft (16), wherein the bearing inner ring (36) has at least one lubricant opening (38) for the targeted conducting of lubricant through the bearing inner ring (36).

2. Drive assembly (10) according to Claim 1, **characterized in that** the lubricant channel (24) is arranged in the region of an end (26) of the second shaft (16) facing away from the first shaft (12) and opens or projects into the end (26) facing away from the first shaft (12).

3. Drive assembly (10) according to Claim 1 or 2, **characterized in that** the second shaft (16) has a plug element (28) at its end (26) facing away from the first shaft (12), in order to prevent lubricant from escaping, in particular from the end (26) of the second shaft (16) facing away from the first shaft (12).

4. Drive assembly (10) according to one of the preceding claims, **characterized in that** the first shaft (12) has, on its outer side (30), at least one lubricant groove (32) for the targeted conducting of lubricant on the outer side (30) of the first shaft (12).

5. Drive assembly (10) according to one of the preceding claims, **characterized in that** the lubricant is oil.

6. Drive assembly (10) according to one of the preceding claims, **characterized in that** a radial shaft sealing ring (40) is arranged on the first shaft (12).

7. Drive assembly (10) according to one of the two preceding claims, **characterized in that** the drive assembly (10) has a lubricant conducting ring (42) for the targeted conducting of lubricant to the bearing (34) and/or to the radial shaft sealing ring (40).

8. Drive assembly (10) according to one of the preceding claims, **characterized in that** the first toothing (14) of the first shaft (12) is in the form of an external toothing (44) and the second toothing (18) of the second shaft (16) is in the form of an internal toothing (46).

9. Drive assembly (10) according to one of Claims 1 to 7, **characterized in that** the first shaft (12) is in the form of a hollow shaft, the first toothing (14) of the first shaft (12) is in the form of an internal toothing and the second toothing (18) of the second shaft (16) is in the form of an external toothing.

10. Vehicle, in particular motor vehicle, having at least one drive assembly (10) according to one of the preceding claims.

## Revendications

1. Ensemble d'entraînement (10), en particulier pour un véhicule, comprenant :
- un premier arbre (12) avec une première denture (14),
- un deuxième arbre (16) avec une deuxième denture (18), le premier arbre (12) et le deuxième arbre (16) pouvant tourner autour d'un axe de rotation (20), le deuxième arbre (16) étant formé comme un arbre creux,
la première denture (14) du premier arbre (12) et la deuxième denture (18) du deuxième arbre (16) formant une denture cannelée (22) pour la transmission d'un couple de rotation, et
- au moins un canal de lubrifiant (24) destiné à acheminer du lubrifiant dans le deuxième arbre (16), **caractérisé en ce que** le premier arbre (12) et le deuxième arbre (16) sont montés au moyen d'un palier (34) dans la zone de la denture cannelée (22), le palier (34) comprenant une bague intérieure (36) de palier, la bague intérieure (36) de palier étant en contact avec le premier arbre (12) et le deuxième arbre (16), la bague intérieure (36) de palier comportant au moins une ouverture de lubrifiant (38) destinée à acheminer de manière ciblée du lubrifiant à travers la bague intérieure (36) de palier.

2. Ensemble d'entraînement (10) selon la revendication 1, **caractérisé en ce que** le canal de lubrifiant (24) est disposé dans la zone d'une extrémité (26) du deuxième arbre (16) opposée au premier arbre (12) et débouche ou dépasse dans l'extrémité (26) opposée au premier arbre (12).

3. Ensemble d'entraînement (10) selon la revendication 1 ou 2, **caractérisé en ce que** le deuxième arbre (16) comporte, sur son extrémité (26) opposée au premier arbre (12), un élément formant bouchon (28) pour empêcher une sortie de lubrifiant, en particulier de l'extrémité (26) du deuxième arbre (16) opposée au premier arbre (12).

4. Ensemble d'entraînement (10) selon l'une des revendications précédentes, **caractérisé en ce que** le premier arbre (12) comporte sur sa face extérieure (30) au moins une rainure de lubrifiant (32) destinée à acheminer de manière ciblée du lubrifiant sur la face extérieure (30) du premier arbre (12).

5. Ensemble d'entraînement (10) selon l'une des revendications précédentes, **caractérisé en ce que** le lubrifiant est de l'huile.

6. Ensemble d'entraînement (10) selon l'une des revendications précédentes, **caractérisé en ce qu'**une bague d'étanchéité radiale pour arbre (40) est disposée sur le premier arbre (12).

7. Ensemble d'entraînement (10) selon l'une des deux revendications précédentes, **caractérisé en ce que** l'ensemble d'entraînement (10) comporte une bague de guidage de lubrifiant (42) destinée à acheminer de manière ciblée du lubrifiant vers le palier (34) et/ou vers la bague d'étanchéité radiale pour arbre (40).

8. Ensemble d'entraînement (10) selon l'une des revendications précédentes, **caractérisé en ce que** la première denture (14) du premier arbre (12) est formée comme une denture extérieure (44) et la deuxième denture (18) du deuxième arbre (16) est formée comme une denture intérieure (46).

9. Ensemble d'entraînement (10) selon l'une des revendications 1 à 7, **caractérisé en ce que** le premier arbre (12) est formé comme un arbre creux, la première denture (14) du premier arbre (12) est formée comme une denture intérieure et la deuxième denture (18) du deuxième arbre (16) est formée comme une denture extérieure.

10. Véhicule, en particulier véhicule à moteur, avec au moins un ensemble d'entraînement (10) selon l'une des revendications précédentes.
